# FASCICULE DE BREVET EUROPEEN

(11) **EP 0 967 428 B1**
(45) Date de publication et mention de la délivrance du brevet: **11.06.2003**
(21) Numéro de dépôt: 99401531.1
(22) Date de dépôt: 21.06.1999
(51) Int. Cl.: F16L 33/207

(54) **Raccord destiné à être positionné sur l'extrémité d'un tuyau**
Kupplung zum Positionieren an einem Schlauchende
Connector to be located on the end of a hose

(30) Priorité: 23.06.1998 FR 9807906
(43) Date de publication de la demande: 29.12.1999
(73) Titulaire: Trelleborg Industrie, 63000 Clermont-Ferrand (FR)
(72) Inventeur: Desnier, Georges, 63360 Gerzat (FR)
(74) Mandataire: Peuscet, Jacques

(56) Documents cités:
- EP-A- 0 807 781
- DE-A- 19 603 228
- DE-U- 29 713 845

## Description

La présente invention concerne, d'une manière générale, un raccord serti destiné à être positionné à l'extrémité d'un tuyau, tel qu'un tuyau souple, ce raccord comportant un élément interne et une jupe externe.

De manière connue en soi (voir, par exemple, EP-A-0 807 781), un raccord serti est constitué d'un élément interne et d'un élément externe appelé jupe. L'élément interne présente une première partie destinée à être introduite à l'intérieur du tuyau à équiper et une seconde partie destinée à dépasser à l'extérieur du tuyau et à permettre la liaison dudit tuyau à un autre organe, par exemple un autre tuyau ou un robinet. La jupe externe est globalement cylindrique et présente à l'une de ses extrémités un bord tombé, le diamètre interne de l'anneau constitué par ce bord tombé étant tel que celui-ci puisse, lors de la mise en place de la jupe externe, coulisser autour de la surface externe du tuyau, les diamètres de ladite jupe externe et de son bord tombé étant par la suite réduits lors d'un passage sur une sertisseuse de manière à assurer le maintien du tuyau sur l'élément interne par le serrage dû à la jupe externe sertie.

La première partie de l'élément interne peut présenter une surface externe crénelée afin de freiner le retrait du tuyau ou être lisse. La seconde partie de l'élément interne est usuellement une partie filetée mâle ou femelle ou un autre type de connexion, notamment brides, raccords à cames ou analogues.

L'élément interne présente, en outre, une ou deux collerettes circonférentielles. Dans le cas où l'élément interne porte deux collerettes circonférentielles, celles-ci sont disposées parallèlement entre ses première et seconde parties et sont séparées par une rainure. La jupe externe, après avoir été enfilée sur le tuyau, lui-même disposé sur l'élément interne, est positionnée de manière à recouvrir l'extrémité du tuyau, la première partie de l'élément interne et la collerette positionnée du côté de cette première partie, son extrémité distale étant ainsi positionnée à faible distance de la collerette positionnée du côté de la seconde partie de l'élément interne, tandis que son bord tombé est au-dessus de la rainure séparant les deux collerettes circonférentielles. Lors du sertissage de la jupe externe, son diamètre est réduit de manière à pincer le tuyau tandis que son bord tombé est introduit dans la rainure de manière à immobiliser la jupe externe en translation par rapport à l'élément interne, le diamètre intérieur du bord tombé étant alors devenu inférieur au diamètre externe des collerettes.

Le problème, que pose l'utilisation de ce type de raccord, se présente lorsque l'on désire le démonter. En effet, le tuyau peut se détériorer au cours du temps ou peut être endommagé et il devient alors nécessaire de le changer ; au cours de cette manoeuvre, il est souhaitable de récupérer l'élément le plus cher du raccord, c'est-à-dire l'élément interne qui est une pièce réalisée en matériau noble, laiton ou cuivre par exemple, et qui nécessite un usinage précis lors de sa fabrication.

Pour ce faire, on cherche à découper la jupe externe afin de l'enlever pour pouvoir retirer l'élément interne du tuyau. Il faut alors découper la partie cylindrique de la jupe externe qui recouvre le tuyau et le bord tombé qui est introduit dans la rainure de l'élément interne. Avec les raccords actuels, cette opération est rarement réalisée de manière satisfaisante car il est difficile, voire impossible, de découper la jupe externe sans endommager l'une ou l'autre des collerettes de l'élément interne.

La présente invention a pour but de proposer une disposition permettant de retirer facilement la jupe externe sans endommager l'élément interne du raccord.

A cet effet, l'invention concerne un raccord destiné à être positionné sur l'extrémité d'un tuyau, ledit raccord comportant un élément interne et une jupe externe, ledit élément interne étant une pièce globalement cylindrique, traversée de bout en bout par un alésage et présentant deux parties, une première partie destinée à être insérée à l'intérieur du tuyau et une seconde partie destinée à dépasser à l'extérieur du tuyau, au moins une collerette étant disposée entre lesdites première et seconde parties, ladite jupe externe étant constituée d'une paroi cylindrique destinée à recouvrir l'extrémité du tuyau, dans laquelle est positionnée la première partie de l'élément interne, ladite paroi cylindrique se terminant d'un côté par un bord tombé destiné à coopérer avec au moins une des collerettes de l'élément interne après que ladite jupe ait été soumise à un sertissage, caractérisé par le fait qu'au moins deux encoches sont formées dans la jupe externe et divisent le bord tombé et l'extrémité adjacente de la paroi cylindrique de ladite jupe externe en segments.

De manière préférée, l'élément interne porte, entre ses première et deuxième parties, deux collerettes séparées par une rainure, le sertissage de la jupe externe introduisant le bord tombé de ladite jupe dans ladite rainure ; les encoches de la jupe externe peuvent s'étendre longitudinalement sur une longueur telle que, lorsque la jupe externe est sertie sur le tuyau, son bord tombé étant engagé dans la rainure, elles se terminent au-delà de celle des collerettes qui est adjacente à la première partie de l'élément interne du raccord.

Par cette disposition, une découpe de la jupe externe effectuée longitudinalement pour tomber dans les encoches permet de séparer la jupe externe en au moins deux segments cylindriques comportant chacun un segment annulaire du bord tombé, ces deux segments cylindriques pouvant être écartés pour libérer le tuyau et l'élément interne.

Avantageusement, la face externe de la première partie de l'élément interne est crénelée annulairement ou lisse.

La face interne de la jupe externe du raccord peut être crénelée annulairement ou lisse.

L'invention concerne également une jupe destinée à être mise en oeuvre dans un raccord pour tuyau afin de maintenir ledit tuyau sur un élément interne lorsqu'elle est soumise à un sertissage, ladite jupe comportant une paroi cylindrique et un bord tombé, caractérisée par le fait qu'elle présente au moins deux encoches longitudinales divisant le bord tombé et l'extrémité adjacente de la paroi cylindrique en segments.

La face interne de la jupe externe peut être crénelée annulairement ou lisse.

L'invention sera mieux comprise grâce à la description qui va suivre, donnée à titre d'exemple non limitatif, en se référant au dessin annexé.

Sur ce dessin :
- la figure 1 est une vue en coupe du raccord monté sur un tuyau, avant le sertissage de la jupe externe ;
- la figure 2 est une vue semblable à la figure 1 montrant le raccord après le sertissage de la jupe externe ;
- la figure 3 est une demi-vue de dessus du raccord de la figure 2, selon III-III de la figure 2 ;
- la figure 4 est une demi-vue en bout de la jupe externe du raccord selon l'invention.

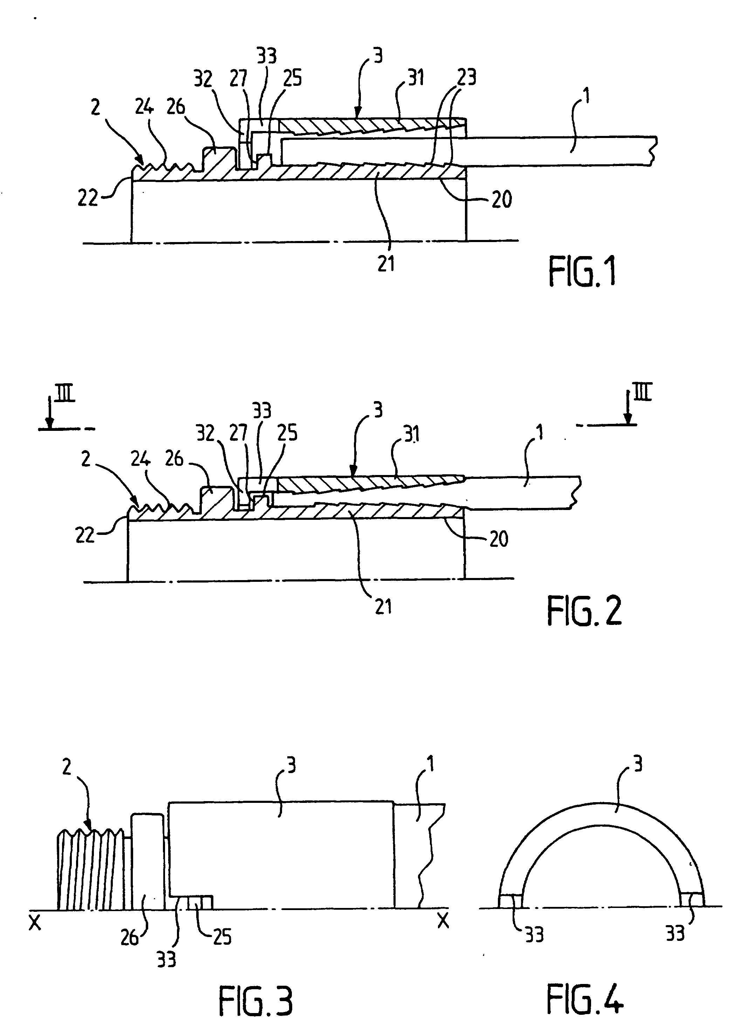

Comme visible sur la figure 1, le raccord destiné à être positionné sur l'extrémité d'un tuyau 1 est constitué d'un élément interne 2 et d'une jupe externe 3.

L'élément interne 2 est une pièce globalement cylindrique, traversée de bout en bout par un alésage 20 et présentant deux parties, une première partie 21 insérée à l'intérieur du tuyau 1 et une seconde partie 22 dépassant à l'extérieur de ce tuyau 1.

La première partie 21 a une surface externe sensiblement cylindrique crénelée annulairement ; elle présente une succession de dents 23 tronconiques ayant leur petite extrémité tournée vers l'extrémité du raccord destinée à pénétrer dans le tuyau. Cette disposition permet de faciliter la mise en place du tuyau sur l'élément interne tout en freinant son retrait. Cette première partie 21 pourrait aussi présenter en variante une légère conicité pour faciliter la mise en place du tuyau.

La seconde partie 22 porte un filetage extérieur 24 destiné à permettre la liaison du raccord portant le tuyau avec un organe présentant un raccord femelle correspondant ; tout autre type de liaison de raccordement pourrait être envisagé.

Entre lesdites première 21 et seconde 22 parties, l'élément interne présente deux collerettes circonférentielles 25 et 26. La collerette 25 disposée à l'extrémité de la première partie 21 est plus petite que la collerette 26 disposée à l'extrémité de la seconde partie 22, aussi bien en largeur qu'en hauteur. La collerette 25 constitue une butée lors de la mise en place du tuyau, tandis que la collerette 26 forme une butée lors du raccordement à un raccord femelle.

Les deux collerettes 25 et 26 sont séparées par une rainure 27 destinée à assurer un blocage en translation de la jupe externe 3.

La jupe externe 3 est constituée d'une paroi extérieurement cylindrique 31 ; la paroi 31 recouvre l'extrémité du tuyau 1 dans laquelle est disposée la première partie 21 de l'élément interne 2 et d'un côté, elle se termine par un bord tombé 32. La zone de petit diamètre de la face interne de la paroi 31 est adjacente au bord tombé 32. Le diamètre interne du bord tombé est supérieur au diamètre externe de la collerette 26 afin que l'on puisse positionner la jupe externe en la faisant coulisser à partir de l'extrémité du tuyau. La surface interne de la paroi cylindrique est, dans l'exemple décrit, crénelée annulairement de manière à freiner un retrait éventuel du tuyau ; toutefois, elle pourrait être lisse.

Pour la mise en place du raccord, on introduit l'élément interne dans l'extrémité du tuyau 1, jusqu'à ce que ledit tuyau soit près du bossage 25, on fait coulisser la jupe externe 3 sur le tout jusqu'à ce que son bord tombé 32 soit au-dessus de la rainure 27.

Les différents éléments étant positionnés comme représenté à la figure 1, on utilise une sertisseuse pour réduire le diamètre de la jupe externe. Ce faisant, la paroi cylindrique 31 écrase le tuyau et le pince entre elle et la première partie 21 de l'élément interne 2, tandis que le bord tombé 32 pénètre dans la rainure 27, comme représenté à la figure 2 ce qui immobilise ladite jupe en translation par rapport à l'élément interne.

Dans l'exemple décrit, deux encoches 33 longitudinales sont formées dans la jupe externe 3 ; ces encoches 33 divisent le bord tombé 32 et l'extrémité adjacente de la paroi cylindrique 31 de la jupe externe en deux segments. Comme visible à la figure 3, les encoches 33 s'étendent longitudinalement sur une longueur telle que, lorsque la jupe externe est en place dans le raccord, avec son bord tombé 32 dans la rainure 27, elles se terminent au-delà du bossage 25. On pourrait prévoir un nombre d'encoches supérieur à deux ; avantageusement, les encoches sont régulièrement réparties autour de l'axe de la jupe externe 3.

Lorsque l'on veut démonter le raccord afin de récupérer l'élément interne 2 lors du changement du tuyau, on scie la jupe externe longitudinalement dans le prolongement de chaque encoche 33, suivant la ligne X-X de la figure 3, à partir de son extrémité opposée au bord tombé 32. Etant donné que les encoches 33 laissent voir la collerette 25, il est facile d'arrêter la découpe à temps pour ne pas endommager ce bossage 25.

A la suite de la découpe de la jupe externe, les deux segments du bord tombé 32 ne sont plus reliés l'un à l'autre et peuvent très facilement être enlevés de la rainure 27.

Lorsque la jupe est ainsi retirée, l'élément interne peut être récupéré pour être réutilisé sur un nouveau tuyau.

## Revendications

1. Raccord destiné à être positionné sur l'extrémité d'un tuyau (1), ledit raccord comportant un élément interne (2) et une jupe externe (3), ledit élément interne (2) étant une pièce globalement cylindrique, traversée de bout en bout par un alésage (20) et présentant deux parties, une première partie (21) destinée à être insérée à l'intérieur du tuyau (1) et une seconde partie (22) destinée à dépasser à l'extérieur du tuyau (1), au moins une collerette (25, 26) étant disposée entre lesdites première (21) et seconde (22) parties, ladite jupe externe (3) étant constituée d'une paroi cylindrique (31) destinée à recouvrir l'extrémité du tuyau (1) dans laquelle est positionnée la première partie de l'élément interne (2), ladite paroi cylindrique (31) se terminant d'un côté par un bord tombé (32) destiné à coopérer avec au moins une (25) des collerettes de l'élément interne (2) après que ladite jupe externe (3) ait été soumise à un sertissage, **caractérisé par le fait qu'**au moins deux encoches (33) sont formées dans la jupe externe (3) et divisent le bord tombé (32) et l'extrémité adjacente de la paroi cylindrique (31) de ladite jupe externe en segments.

2. Raccord selon la revendication 1, **caractérisé par le fait que** l'élément interne (2) du raccord porte, entre ses première et deuxième parties, deux collerettes (25, 26) séparées par une rainure (27), le sertissage de la jupe externe (3) introduisant le bord tombé (32) de ladite jupe dans ladite rainure.

3. Raccord selon la revendication 2, **caractérisé par le fait que** les encoches (33) de la jupe externe (3) s'étendent longitudinalement sur une longueur telle que, lorsque la jupe externe (3) est sertie sur le tuyau (1), son bord tombé (32) étant engagé dans la rainure (27), elles se terminent au-delà de la collerette (25), qui est adjacente à la première partie (21) de l'élément interne (2) du raccord.

4. Raccord selon l'une des revendications 1 ou 2, **caractérisé par le fait qu'**une découpe de la jupe externe (3) effectuée longitudinalement pour tomber dans les encoches (33) permet de séparer la jupe externe en au moins deux segments cylindriques comportant chacun un segment annulaire du bord tombé (32), ces deux segments cylindriques pouvant être écartés pour libérer le tuyau (1) et l'élément interne (2).

5. Raccord selon l'une des revendications 1 à 4, **caractérisé par le fait que** la face externe de la première partie (21) de l'élément interne (2) est crénelée annulairement.

6. Raccord selon l'une des revendications 1 à 4, **caractérisé par le fait que** la face externe de la première partie (21) de l'élément interne (2) est lisse.

7. Raccord selon l'une des revendications 1 à 6, **caractérisé par le fait que** la face interne de la jupe externe (3) est crénelée annulairement.

8. Raccord selon l'une des revendications 1 à 6, **caractérisé par le fait que** la face interne de la jupe externe (3) est lisse.

9. Jupe destinée à être mise en oeuvre dans un raccord pour tuyau afin de maintenir ledit tuyau (1) sur un élément interne (2) lorsqu'elle est soumise à un sertissage, ladite jupe comportant une paroi cylindrique (31) et un bord tombé (32), **caractérisée par le fait qu'**elle présente au moins deux encoches (33) longitudinales divisant le bord tombé (32) et l'extrémité adjacente de la paroi cylindrique (31) en segments.

10. Jupe selon la revendication 9, **caractérisée par le fait que** la face interne de la jupe externe (3) est crénelée annulairement.

11. Jupe selon la revendication 9, **caractérisée par le fait que** la face interne de la jupe externe (3) est lisse.

## Patentansprüche

1. Kupplung zum Positionieren am Ende eines Schlauchs (1), wobei die Kupplung folgendes aufweist: ein inneres Element (2) und einen äußeren Mantel (3), wobei das innere Element (2) ein insgesamt zylindrisches, von einem zum anderen Ende von einer Bohrung (20) durchquertes Bauteil ist und zwei Teile aufweist, wovon ein erster Teil (21) dazu bestimmt ist, in das Innere des Schlauchs (1) eingeschoben zu werden, und ein zweiter Teil (22) dazu bestimmt ist, außen über den Schlauch (1) überzustehen, wenigstens einen zwischen dem ersten (21) und dem zweiten (22) Teil angeordneten Bund (25, 26), wobei der äußere Mantel (3) von einer zylindrischen Wandung (31) gebildet ist, die dazu bestimmt ist, das Ende des Schlauchs (1) zu überdecken, in dem der erste Teil des inneren Elements (2) angeordnet ist, wobei die zylindrische Wandung (31) auf einer Seite mit einem eingezogenen Rand (32) endet, der dazu bestimmt ist, mit wenigstens einem (25) der Bunde des inneren Elements (2) zusammenzuwirken, nachdem der äußere Mantel (3) einem Quetschvorgang unterzogen wurde, **dadurch gekennzeichnet, dass** wenigstens zwei Ausnehmungen (33) im äußeren Mantel (3) ausgebildet sind und den eingezogenen Rand (32) und das benachbarte Ende der zylindrischen Wandung (31) des äußeren Mantels in Abschnitte unterteilen.

2. Kupplung nach Anspruch 1, **dadurch gekennzeichnet, dass** das innere Element (2) der Kupplung zwischen seinem ersten und zweiten Teil zwei durch eine Nut (27) voneinander getrennte Bunde (25, 26) aufweist, wobei das Quetschen des äußeren Mantels (3) zum Eindringen des eingezogenen Randes (32) des Mantels in diese Nut führt.

3. Kupplung nach Anspruch 2, **dadurch gekennzeichnet, dass** die Ausnehmungen (33) des äußeren Mantels (3) sich in Längsrichtung auf einer derartigen Länge erstrecken, dass sie dann, wenn der äußere Mantel (3) auf dem Schlauch (1) aufgequetscht und sein eingezogene Rand (32) in die Nut (27) eingedrungen ist, jenseits desjenigen Bundes (25) enden, der dem ersten Teil (21) des inneren Elements (2) der Kupplung benachbart ist.

4. Kupplung nach einem der Ansprüche 1 oder 2, **dadurch gekennzeichnet, dass** ein in Längsrichtung erfolgendes Aufschneiden des äußeren Mantels (3), um an die Ausnehmungen (33) heranzukommen, es ermöglicht, den äußeren Mantel in wenigstens zwei zylindrische Abschnitte zu teilen, wobei jeder einen ringförmigen Abschnitt des eingezogenen Randes (32) aufweist und diese beiden zylindrischen Abschnitte entfernt werden können, um den Schlauch (1) und das innere Element (2) freizulegen.

5. Kupplung nach einem der Ansprüche 1 bis 4, **dadurch gekennzeichnet, dass** die Außenseite des ersten Teils (21) des inneren Elements (2) ringförmig gerippt ist.

6. Kupplung nach einem der Ansprüche 1 bis 4, **dadurch gekennzeichnet, dass** die Außenseite des ersten Teils (21) des inneren Elements (2) glatt ist.

7. Kupplung nach einem der Ansprüche 1 bis 6, **dadurch gekennzeichnet, dass** die Innenseite des äußeren Mantels (3) ringförmig gerippt ist.

8. Kupplung nach einem der Ansprüche 1 bis 6, **dadurch gekennzeichnet, dass** die Innenseite des äußeren Mantels (3) glatt ist.

9. Mantel, dazu bestimmt, in einer Schlauchkupplung benutzt zu werden, um den Schlauch (1) auf einem inneren Element (2) zu halten, wenn der Mantel einem Quetschvorgang unterzogen wird, wobei der Mantel eine zylindrische Wandung (31) und einen eingezogenen Rand (32) aufweist, **dadurch gekennzeichnet, dass** er wenigstens zwei längsgerichtete Ausnehmungen (33) aufweist, die den eingezogenen Rand (32) und das benachbarte Ende der zylindrischen Wandung (31) in Abschnitte unterteilen.

10. Mantel nach Anspruch 9, **dadurch gekennzeichnet, dass** die Innenseite des äußeren Mantels (3) ringförmig gerippt ist.

11. Mantel nach Anspruch 9, **dadurch gekennzeichnet, dass** die Innenseite des äußeren Mantels (3) glatt ist.

## Claims

1. Connector intended to be positioned on the end of a pipe (1), the said connector comprising an internal element (2) and an external skirt (3), the said internal element (2) being a part which on the whole is cylindrical, passed through from end to end by a bore (20) and having two parts, a first part (21) intended to be inserted inside the pipe (1) and a second part (22) intended to protrude out from the pipe (1), at least one collar (25, 26) being arranged between the said first (21) and second (22) parts, the said external skirt (3) consisting of a cylindrical wall (31) intended to cover the end of the pipe (1) in which end the first part of the internal element (2) is positioned, the said cylindrical wall (31) ending, at one end, in a turned-out edge (32) intended to collaborate with at least one (25) of the collars of the internal element (2) after the said external skirt (3) has been crimped, **characterized in that** at least two notches (33) are formed in the external skirt (3) and divide the turned-down edge (32) and the adjacent end of the cylindrical wall (31) of the said external skirt into segments.

2. Connector according to Claim 1, **characterized in that** the internal element (2) of the connector bears, between its first and second parts, two collars (25, 26) separated by a groove (27), the crimping of the external skirt (3) introducing the turned-down edge (32) of the said skirt into the said groove.

3. Connector according to Claim 2, **characterized in that** the notches (33) of the external skirt (3) run longitudinally over a length such that when the external skirt (3) is crimped onto the pipe (1), with its turned-down edge (32) engaged in the groove (27), they end beyond the collar (25) which is adjacent to the first part (21) of the internal element (2) of the connector.

4. Connector according to one of Claims 1 and 2, **characterized in that** a cut along the external skirt (3) made longitudinally to fall into the notches (33) allows the external skirt to be split into at least two cylindrical segments each comprising an annular segment of the turned-down edge (32), these two cylindrical segments being able to be parted in order to release the pipe (1) and the internal element (2).

5. Connector according to one of Claims 1 to 4, **characterized in that** the external face of the first part (21) of the internal element (2) is annularly crenellated.

6. Connector according to one of Claims 1 to 4, **characterized in that** the external face of the first part (21) of the internal element (2) is smooth.

7. Connector according to one of Claims 1 to 6, **characterized in that** the internal face of the external skirt (3) is annularly crenellated.

8. Connector according to one of Claims 1 to 6, **characterized in that** the internal face of the external skirt (3) is smooth.

9. Skirt intended to be used in a connector for a pipe so as to hold the said pipe (1) on an internal element (2) when this skirt is crimped, the said skirt comprising a cylindrical wall (31) and a turned-down edge (32), **characterized in that** it has at least two longitudinal notches (33) dividing the turned-down edge (32) and the adjacent end of the cylindrical wall (31) into segments.

10. Skirt according to Claim 9, **characterized in that** the internal face of the external skirt (3) is annularly crenellated.

11. Skirt according to Claim 9, **characterized in that** the internal face of the external skirt (3) is smooth.
